# EUROPEAN PATENT APPLICATION

(11) **EP 4 509 781 A1**
(43) Date of publication of application: **19.02.2025**
(21) Application number: 23788489.5
(22) Date of filing: 23.03.2023
(51) Int. Cl.: F25D 23/06, F25D 23/00, F16L 59/065, F16L 59/12, F16L 59/08, F16L 59/04, B29C 45/27

(54) **VACUUM INSULATION PANEL**

(30) Priority: 13.04.2022 KR 20220045921
(71) Applicant: LG Electronics Inc., Yeongdeungpo-gu Seoul 07336 (KR)
(72) Inventor: JUNG, Wonyeong, Seoul 08592 (KR); YOUN, Deokhyun, Seoul 08592 (KR); RYU, Minsu, Seoul 08592 (KR)
(74) Representative: Ter Meer Steinmeister & Partner
(86) International application number: PCT/KR2023/003890
(87) International publication number: WO 2023/200137

(57) **Abstract**

A vacuum adiabatic body of the present disclosure comprises: a first plate having a first temperature; a second plate having a second temperature that differs from the first temperature; and a sealing part for sealing the first plate and the second plate so that a vacuum space part may be provided.

## Description

### [Background Art]

A vacuum adiabatic wall may be provided to improve adiabatic performance.

A device of which at least a portion of an internal space is provided in a vacuum state to achieve an adiabatic effect is referred to as a vacuum adiabatic body.

The applicant has developed a technology to obtain a vacuum adiabatic body that may be used in various devices and home appliances, and has disclosed a vacuum adiabatic body and a refrigerator in Korean Patent Publication No. 1020200001396A. The vacuum adiabatic body of the-mentioned cited document discloses that a heat exchanger is installed inside a vacuum space.

The-mentioned cited document presents the self-configuration and support structure of a heat exchanger placed in a vacuum space. The-mentioned cited document does not disclose the specific installation structure of the heat exchanger and its relationship with other members. For example, it does not disclose the relationship between the heat exchanger and other members inside the vacuum space, or the method of mounting the heat exchanger.

### [Disclosure] / [Technical Problem]

The present disclosure proposes an installation structure for a heat exchanger without loss of adiabatic efficiency.

In addition to the examples presented above, the present disclosure proposes specific solutions to problems and solutions for solving them in [Technical Solution] and [Best Mode].

### [Technical Solution]

The vacuum adiabatic body of the present disclosure may include a first plate having a first temperature; a second plate having a second temperature that differs from the first temperature; and a vacuum space provided between the first and second plates.

The vacuum adiabatic body of the present disclosure may include a sealing part that seals the first plate and the second plate so as to provide the vacuum space.

The vacuum adiabatic body of the present disclosure may include a support for maintaining the vacuum space.

The support is manufactured by injection molding, and an injection gate may be provided on the support.

The injection gate may include an injection bar into which injection fluid is introduced from the outside, and an injection flow path through which the injection fluid spreads in various directions.

The injection bar may be provided in at least one of the first lattice of the support plate and a second lattice that differs from the first lattice.

An injection base may be provided between the injection bar and the injection flow path.

The injection base may be larger than the lattice.

The injection flow path may have a cross-sectional area greater than or equal to that of the lattice of the support plate.

The injection flow path may be at least one of one, two, four, and eight.

The support may include a bar for maintaining the first and second plates, and the injection bar may be provided at the same position as the bar of the support.

The support bar and the injection bar may be provided on the same surface or on different surfaces.

The groove supporting the support bar and the injection bar may be provided on the same surface.

A tube may be provided on at least one of the first plate and the second plate.

The tube and the injection gate are spaced apart in the thickness direction of the vacuum space, or when an extension line is drawn in the extension direction of the tube, the extension line may meet the injection gate.

The inclination angle of the injection bar of the injection gate may be greater than the inclination angle of the bar of the support.

The height of the injection gate may be lower than the height of the bar.

The injection gate may include an injection bar through which injection fluid is introduced from the outside, an injection base through which the injection fluid spreads to multiple locations, and an injection flow path through which the injection fluid spreads in multiple directions.

A radiation resistance sheet may be included to reduce radiation heat transfer in the vacuum space.

The injection gate may support at least one surface of the radiation resistance sheet.

The support may include first and second support plates spaced apart from each other at least partially in the vertical direction; a first injection gate of the first support plate; and a second injection gate of the second support plate.

The first and second support plates may be spaced apart from each other and face each other.

A storage space may be provided between the first and second support plates.

A heat exchanger may be included that is placed inside the vacuum space.

The injection gate and the heat exchanger may be placed inside adjacent different lattices of the support.

The injection gate may capture at least one of the peripheral part and the central part of at least one of the radiation resistance sheet and the units forming the radiation resistance sheet.

At least one of the two or more injection gates may support one surface of the radiation resistance sheet.

A support may be provided within the vacuum space and in at least one of the spaces adjacent to the first and second plates to maintain the vacuum space.

The present disclosure may include an injection gate providing the support.

The support may include a support plate. The injection gate may be provided on the support.

The support plate may include a plurality of ribs in a lattice shape.

The injection gate may be provided on at least some of the plurality of ribs.

The plurality of ribs may include a first rib provided with the injection gate and a second rib not provided with the injection gate.

At least one of the first ribs may have a wider width than at least one of the second ribs. Accordingly, the flowability of the injection fluid may be improved.

The injection gate may include a portion extending in the height direction of the vacuum space from the rib.

The support may include a first support plate positioned closer to the first plate than the second plate, and a second support plate positioned closer to the second plate than the first plate.

The injection gate may include a first injection gate provided on the first support plate, and a second injection gate provided on the second support plate.

The first injection gate and the second injection gate may be disposed so as not to overlap each other in the height direction of the vacuum space.

The first injection gate and the second injection gate may be disposed to overlap each other in the height direction of the vacuum space.

The heat transfer resistor may be provided in at least one of the spaces within the vacuum space and adjacent to the first and second plates to reduce heat transfer between the first plate and the second plate.

The heat transfer resistor may include a radiation plate that reduces radiation heat transfer between the first plate and the second plate.

At least a portion of the heat transfer resistor may have the movement thereof restricted by the injection gate.

At least a portion of the heat transfer resistor may be provided between the first injection gate and the second injection gate.

The present disclosure may include a through-hole formed in at least one of the first plate and the second plate.

A passage which is connected to the through-hole and through which a fluid flows may include a pipe provided.

The injection gate may overlap the through-hole in the height direction of the vacuum space.

The injection gate may overlap the tube in the height direction of the vacuum space. A getter may be provided at the lower portion of the tube.

### [Advantageous Effect]

According to the present disclosure, a vacuum adiabatic body with high adiabatic efficiency may be proposed.

According to the present disclosure, a vacuum adiabatic body may be conveniently manufactured.

The effects of the present disclosure are disclosed in more detail in

### [Best Mode]

### [Description of Drawings]

Fig. 1 is a perspective view of a refrigerator according to an embodiment.
Fig. 2 is a view schematically illustrating a vacuum adiabatic body used in a main body and a door of the refrigerator.
Fig. 3 is a view illustrating an example of a support that maintains a vacuum space.
Fig. 4 is a view for explaining an example of the vacuum with respect to a heat transfer resistor.
Fig. 5 is a graph illustrating results obtained by observing a process of exhausting the inside of the vacuum adiabatic body with a time and pressure when the support is used.
Fig. 6 is a graph illustrating results obtained by comparing a vacuum pressure to gas conductivity.
Fig. 7 is a view for explaining a method for manufacturing a vacuum adiabatic body.
Fig. 8 is a view illustrating a state where a support and a heat exchanger are installed, as an example.
Fig. 9 is a view illustrating an embodiment of support.
Fig. 10 is a view illustrating an embodiment of an injection gate.
Fig. 11 is a view explaining the shape of an injection gate.
Fig. 12 is a cross-sectional view illustrating a support of an embodiment related to an injection gate.
Fig. 13 is view illustrating an embodiment of the disposition relationship between the injection gate and the heat exchanger.
Fig. 14 is a view illustrating an embodiment of an injection gate.

### [Best Model

Hereinafter, specific embodiments will be described in detail with reference to the accompanying drawings. The invention may, however, be embodied in many different forms and should not be construed as being limited to the embodiments set forth herein, and a person of ordinary skill in the art, who understands the spirit of the present invention, may readily implement other embodiments included within the scope of the same concept by adding, changing, deleting, and adding components; rather, it will be understood that they are also included within the scope of the present invention.

For accurate understanding, the names in the drawings and their descriptions below may be organized as follows. A connection plate or a support plate is a plate-like structure that supports a first plate and a second plate, and may be sometimes referred to as a support plate.

The present invention may have many embodiments in which the idea is implemented, and in each embodiment, any portion may be replaced with a corresponding portion or a portion having a related action according to another embodiment. The present invention may be any one of the examples presented below or a combination of two or more examples.

The present disclosure may be a vacuum adiabatic body including a first plate; a second plate; and a vacuum space provided between the first and second plates. The vacuum adiabatic body may include a sealing part for providing the vacuum state space (vacuum space). The vacuum space may be a space in a vacuum state provided in an internal space between the first plate and the second plate. The seal may seal the first plate and the second plate to provide the internal space provided in the vacuum state. The vacuum adiabatic body may optionally include a side plate connecting the first plate to the second plate. In the present disclosure, the expression "plate" may mean at least one of the first and second plates or the side plate. At least a portion of the first and second plates and the side plate may be integrally provided, or at least portions may be sealed to each other. Optionally, the vacuum adiabatic body may include a support that maintains the vacuum space. The vacuum adiabatic body may selectively include a thermal insulator that reduces an amount of heat transfer between a first space provided in vicinity of the first plate and a second space provided in vicinity of the second plate or reduces an amount of heat transfer between the first plate and the second plate.

Optionally, the vacuum adiabatic body may include a component coupling portion provided on at least a portion of the plate. Optionally, the vacuum adiabatic body may include another adiabatic body. Another adiabatic body may be provided to be connected to the vacuum adiabatic body. Another adiabatic body may be an adiabatic body having a degree of vacuum, which is equal to or different from a degree of vacuum of the vacuum adiabatic body. Another adiabatic body may be an adiabatic body that does not include a degree of vacuum less than that of the vacuum adiabatic body or a portion that is in a vacuum state therein. In this case, it may be advantageous to connect another object to another adiabatic body.

In the present disclosure, a direction along a wall defining the vacuum space may include a longitudinal direction of the vacuum space and a height direction of the vacuum space. The height direction of the vacuum space may be defined as any one direction among virtual lines connecting the first space to the second space to be described later while passing through the vacuum space. The longitudinal direction of the vacuum space may be defined as a direction perpendicular to the set height direction of the vacuum space.

In the present disclosure, that an object A is connected to an object B means that at least a portion of the object A and at least a portion of the object B are directly connected to each other, or that at least a portion of the object A and at least a portion of the object B are connected to each other through an intermedium interposed between the objects A and B. The intermedium may be provided on at least one of the object A or the object B. The connection may include that the object A is connected to the intermedium, and the intermedium is connected to the object B.

A portion of the intermedium may include a portion connected to either one of the object A and the object B. The other portion of the intermedium may include a portion connected to the other of the object A and the object B. As a modified example, the connection of the object A to the object B may include that the object A and the object B are integrally prepared in a shape connected in the above-described manner. In the present disclosure, an embodiment of the connection may be support, combine, or a seal, which will be described later.

In the present disclosure, that the object A is supported by the object B means that the object A is restricted in movement by the object B in one or more of the +X, -X, +Y, -Y, +Z, and -Z axis directions. In the present invention, an embodiment of the support may be the combine or seal, which will be described later. In the present invention, that the object A is combined with the object B may define that the object A is restricted in movement by the object B in one or more of the X, Y, and Z-axis directions.

In the present disclosure, an embodiment of the combining may be the sealing to be described later. In the present disclosure, that the object A is sealed to the object B may define a state in which movement of a fluid is not allowed at the portion at which the object A and the object B are connected. In the present disclosure, one or more objects, i.e., at least a portion of the object A and the object B, may be defined as including a portion of the object A, the whole of the object A, a portion of the object B, the whole of the object B, a portion of the object A and a portion of the object B, a portion of the object A and the whole of the object B, the whole of the object A and a portion of the object B, and the whole of the object A and the whole of the object B. In the present disclosure, that the plate A may be a wall defining the space A may be defined as that at least a portion of the plate A may be a wall defining at least a portion of the space A.

That is, at least a portion of the plate A may be a wall forming the space A, or the plate A may be a wall forming at least a portion of the space A. In the present disclosure, a central portion of the object may be defined as a central portion among three divided portions when the object is divided into three sections based on the longitudinal direction of the object. A periphery of the object may be defined as a portion disposed at a left or right side of the central portion among the three divided portions. The periphery of the object may include a surface that is in contact with the central portion and a surface opposite thereto.

The opposite side may be defined as a border or edge of the object. Examples of the object may include a vacuum adiabatic body, a plate, a heat transfer resistor, a support, a vacuum space, and various components to be introduced in the present disclosure. In the present disclosure, a degree of heat transfer resistance may indicate a degree to which an object resists heat transfer and may be defined as a value determined by a shape including a thickness of the object, a material of the object, and a processing method of the object. The degree of the heat transfer resistance may be defined as the sum of a degree of conduction resistance, a degree of radiation resistance, and a degree of convection resistance.

The vacuum adiabatic body according to the present disclosure may include a heat transfer path defined between spaces having different temperatures, or a heat transfer path defined between plates having different temperatures. For example, the vacuum adiabatic body according to the present disclosure may include a heat transfer path through which cold is transferred from a low-temperature plate to a high-temperature plate. In the present disclosure, when a curved portion includes a first portion extending in a first direction and a second portion extending in a second direction different from the first direction, the curved portion may be defined as a portion that connects the first portion to the second portion (including 90 degrees).

In the present disclosure, the vacuum adiabatic body may optionally include a component coupling portion. The component coupling portion may be defined as a portion provided on the plate to which components are connected to each other. The component connected to the plate may be defined as a penetration portion disposed to pass through at least a portion of the plate and a surface component disposed to be connected to a surface of at least a portion of the plate.

At least one of the penetration component or the surface component may be connected to the component coupling portion. The penetration component may be a component that defines a path through which a fluid (electricity, refrigerant, water, air, etc.) passes mainly. In the present disclosure, the fluid is defined as any kind of flowing material. The fluid includes moving solids, liquids, gases, and electricity. For example, the component may be a component that defines a path through which a refrigerant for heat exchange passes, such as a suction line heat exchanger (SLHX) or a refrigerant tube.

The component may be an electric wire that supplies electricity to an apparatus. As another example, the component may be a component that defines a path through which air passes, such as a cold duct, a hot air duct, and an exhaust port. As another example, the component may be a path through which a fluid such as coolant, hot water, ice, and defrost water pass. The surface component may include at least one of a peripheral adiabatic body, a side panel, injected foam, a pre-prepared resin, a hinge, a latch, a basket, a drawer, a shelf, a light, a sensor, an evaporator, a front decor, a hotline, a heater, an exterior cover, or another adiabatic body.

As an example to which the vacuum adiabatic body is applied, the present disclosure may include an apparatus having the vacuum adiabatic body. Examples of the apparatus may include an appliance. Examples of the appliance may include home appliances including a refrigerator, a cooking appliance, a washing machine, a dishwasher, and an air conditioner, etc. As an example in which the vacuum adiabatic body is applied to the apparatus, the vacuum adiabatic body may constitute at least a portion of a body and a door of the apparatus.

As an example of the door, the vacuum adiabatic body may constitute at least a portion of a general door and a door-in-door (DID) that is in direct contact with the body. Here, the door-in-door may mean a small door placed inside the general door. As another example to which the vacuum adiabatic body is applied, the present disclosure may include a wall having the vacuum adiabatic body. Examples of the wall may include a wall of a building, which includes a window.

Hereinafter, the present disclosure will be described in detail with reference to the accompanying drawings. Each of the drawings accompanying the embodiment may be different from, exaggerated, or simply indicated from an actual article, and detailed components may be indicated with simplified features. The embodiment should not be interpreted as being limited only to the size, structure, and shape presented in the drawings. In the embodiments accompanying each of the drawings, unless the descriptions conflict with each other, some configurations in the drawings of one embodiment may be applied to some configurations of the drawings in another embodiment, and some structures in one embodiment may be applied to some structures in another embodiment.

In the description of the drawings for the embodiment, the same reference numerals may be assigned to different drawings as reference numerals of specific components constituting the embodiment. Components having the same reference number may perform the same function. For example, the first plate constituting the vacuum adiabatic body has a portion corresponding to the first space throughout all embodiments and is indicated by reference number 10. The first plate may have the same number for all embodiments and may have a portion corresponding to the first space, but the shape of the first plate may be different in each embodiment. Not only the first plate, but also the side plate, the second plate, and another adiabatic body may be understood as well.

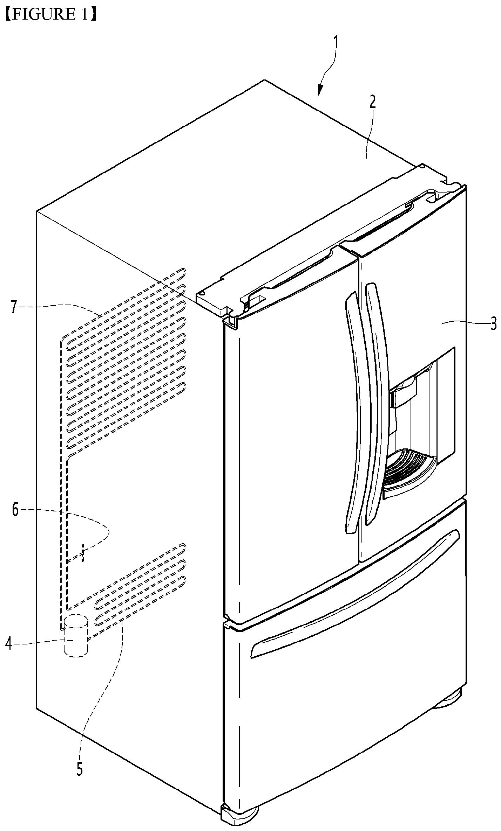

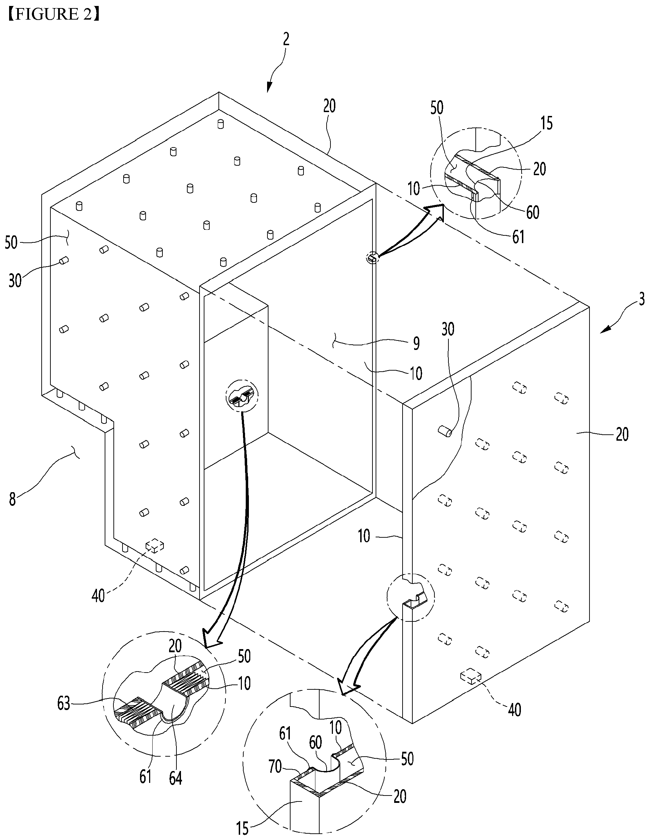

Fig. 1 is a perspective view of a refrigerator according to an embodiment, and FIG. 2 is a schematic view illustrating a vacuum adiabatic body used for a body and a door of the refrigerator. Referring to Fig. 1, the refrigerator 1 includes a main body 2 provided with a cavity 9 capable of storing storage goods and a door 3 provided to open and close the main body 2.

The door 3 may be rotatably or slidably disposed to open or close the cavity 9. The cavity 9 may provide at least one of a refrigerating compartment and a freezing compartment.

A cold source that supplies cold to the cavity may be provided. For example, the cold source may be an evaporator 7 that evaporates the refrigerant to take heat. The evaporator 7 may be connected to a compressor 4 that compresses the refrigerant evaporated to the cold source. The evaporator 7 may be connected to a condenser 5 that condenses the compressed refrigerant to the cold source. The evaporator 7 may be connected to an expander 6 that expands the refrigerant condensed in the cold source.

A fan corresponding to the evaporator and the condenser may be provided to promote heat exchange. As another example, the cold source may be a heat absorption surface of a thermoelectric element. A heat absorption sink may be connected to the heat absorption surface of the thermoelectric element. A heat sink may be connected to a heat radiation surface of the thermoelectric element. A fan corresponding to the heat absorption surface and the heat generation surface may be provided to promote heat exchange.

Referring to FIG. 2, plates 10, 15, and 20 may be walls defining the vacuum space. The plates may be walls that partition the vacuum space from an external space of the vacuum space. An example of the plates is as follows. The present disclosure may be any one of the following examples or a combination of two or more examples.

The plate may be provided as one portion or may be provided to include at least two portions connected to each other.

As a first example, the plate may include at least two portions connected to each other in a direction along a wall defining the vacuum space. Any one of the two portions may include a portion (e.g., a first portion) defining the vacuum space. The first portion may be a single portion or may include at least two portions that are sealed to each other. The other one of the two portions may include a portion (e.g., a second portion) extending from the first portion of the first plate in a direction away from the vacuum space or extending in an inner direction of the vacuum space.

As a second example, the plate may include at least two layers connected to each other in a thickness direction of the plate. Any one of the two layers may include a layer (e.g., the first portion) defining the vacuum space. The other one of the two layers may include a portion (e.g., the second portion) provided in an external space (e.g., a first space and a second space) of the vacuum space.

In this case, the second portion may be defined as an outer cover of the plate. The other one of the two layers may include a portion (e.g., the second portion) provided in the vacuum space. In this case, the second portion may be defined as an inner cover of the plate.

The plate may include a first plate 10 and a second plate 20. One surface of the first plate (the inner surface of the first plate) provides a wall defining the vacuum space, and the other surface (the outer surface of the first plate) of the first plate A wall defining the first space may be provided. The first space may be a space provided in the vicinity of the first plate, a space defined by the apparatus, or an internal space of the apparatus. In this case, the first plate may be referred to as an inner case. When the first plate and the additional member define the internal space, the first plate and the additional member may be referred to as an inner case.

The inner case may include two or more layers. In this case, one of the plurality of layers may be referred to as an inner panel. One surface of the second plate (the inner surface of the second plate) provides a wall defining the vacuum space, and the other surface (the outer surface of the first plate) of the second plate A wall defining the second space may be provided. The second space may be a space provided in vicinity of the second plate, another space defined by the apparatus, or an external space of the apparatus. In this case, the second plate may be referred to as an outer case. When the second plate and the additional member define the external space, the second plate and the additional member may be referred to as an outer case. The outer case may include two or more layers. In this case, one of the plurality of layers may be referred to as an outer panel.

The second space may be a space having a temperature higher than that of the first space or a space having a temperature lower than that of the first space. Optionally, the plate may include a side plate 15. In FIG. 2, the side plate may also perform a function of a conductive resistance sheet 60 to be described later, according to the disposition of the side plate. The side plate may include a portion extending in a height direction of a space defined between the first plate and the second plate.

The side plate may include a portion extending in a height direction of the vacuum space.

One surface of the side plate may provide a wall defining the vacuum space, and the other surface of the side plate may provide a wall defining an external space of the vacuum space. The external space of the vacuum space may be at least one of the first space or the second space or a space in which another adiabatic body to be described later is disposed. The side plate may be integrally provided by extending at least one of the first plate or the second plate or a separate component connected to at least one of the first plate or the second plate.

The plate may optionally include a curved portion. In the present disclosure, the plate including a curved portion may be referred to as a bent plate. The curved portion may include at least one of the first plate, the second plate, the side plate, between the first plate and the second plate, between the first plate and the side plate, or between the second plate and the side plate. The plate may include at least one of a first curved portion or a second curved portion, an example of which is as follows.

First, the side plate may include the first curved portion. A portion of the first curved portion may include a portion connected to the first plate. Another portion of the first curved portion may include a portion connected to the second curved portion. In this case, a curvature radius of each of the first curved portion and the second curved portion may be large. The other portion of the first curved portion may be connected to an additional straight portion or an additional curved portion, which are provided between the first curved portion and the second curved portion. In this case, a curvature radius of each of the first curved portion and the second curved portion may be small.

Second, the side plate may include the second curved portion. A portion of the second curved portion may include a portion connected to the second plate. The other portion of the second curved portion may include a portion connected to the first curved portion. In this case, a curvature radius of each of the first curved portion and the second curved portion may be large. The other portion of the second curved portion may be connected to an additional straight portion or an additional curved portion, which are provided between the first curved portion and the second curved portion. In this case, a curvature radius of each of the first curved portion and the second curved portion may be small. Here, the straight portion may be defined as a portion having a curvature radius greater than that of the curved portion. The straight portion may be understood as a portion having a perfect plane or a curvature radius greater than that of the curved portion. Third, the first plate may include the first curved portion. A portion of the first curved portion may include a portion connected to the side plate. A portion connected to the side plate may be provided at a position that is away from the second plate at a portion at which the first plate extends in the longitudinal direction of the vacuum space.

Fourth, the second plate may include the second curved portion. A portion of the second curved portion may include a portion connected to the side plate. A portion connected to the side plate may be provided at a position that is away from the first plate at a portion at which the second plate extends in the longitudinal direction of the vacuum space. The present disclosure may include a combination of any one of the first and second examples described above and any one of the third and fourth examples described above.

In the present disclosure, the vacuum space 50 may be defined as a third space. The vacuum space may be a space in which a vacuum pressure is maintained. In the present disclosure, the expression that a vacuum degree of A is higher than that of B means that a vacuum pressure of A is lower than that of B.

In the present disclosure, the seal 61 may be a portion provided between the first plate and the second plate. Examples of sealing are as follows. The present disclosure may be any one of the following examples or a combination of two or more examples. The sealing may include fusion welding for coupling the plurality of objects by melting at least a portion of the plurality of objects. For example, the first plate and the second plate may be welded by laser welding in a state in which a melting bond such as a filler metal is not interposed therebetween, a portion of the first and second plates and a portion of the component coupling portion may be welded by high-frequency brazing or the like, or a plurality of objects may be welded by a melting bond that generates heat. The sealing may include pressure welding for coupling the plurality of objects by a mechanical pressure applied to at least a portion of the plurality of objects.

For example, as a component connected to the component coupling portion, an object made of a material having a degree of deformation resistance less than that of the plate may be pressurewelded by a method such as pinch-off.

A machine room 8 may be optionally provided outside the vacuum adiabatic body. The machine room may be defined as a space in which components connected to the cold source are accommodated. Optionally, the vacuum adiabatic body may include a port 40. The port may be provided at any one side of the vacuum adiabatic body to discharge air of the vacuum space 50.

Optionally, the vacuum adiabatic body may include a conduit 64 passing through the vacuum space 50 to install components connected to the first space and the second space.

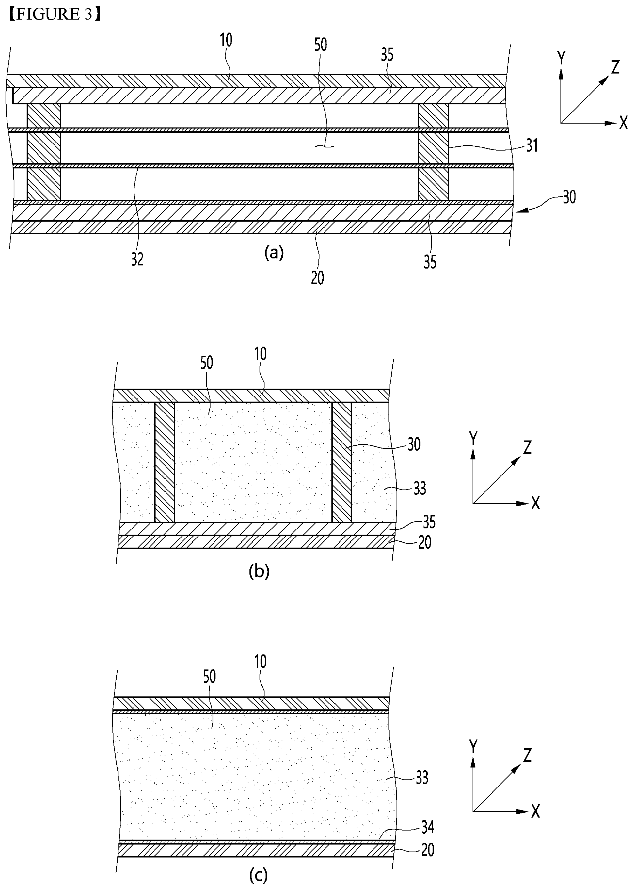

Fig. 3 is a view illustrating an example of a support that maintains the vacuum space. An example of the support is as follows. The present disclosure may be any one of the following examples or a combination of two or more examples.

The supports 30, 31, 33, and 35 may be provided to support at least a portion of the plate and a heat transfer resistor to be described later, thereby reducing deformation of at least some of the vacuum space 50, the plate, and the heat transfer resistor to be described later due to external force.

The external force may include at least one of a vacuum pressure or external force excluding the vacuum pressure. When the deformation occurs in a direction in which a height of the vacuum space is lower, the support may reduce an increase in at least one of radiant heat conduction, gas heat conduction, surface heat conduction, or support heat conduction, which will be described later.

The support may be an object provided to maintain a gap between the first plate and the second plate or an object provided to support the heat transfer resistor. The support may have a degree of deformation resistance greater than that of the plate or be provided to a portion having weak degree of deformation resistance among portions constituting the vacuum adiabatic body, the apparatus having the vacuum adiabatic body, and the wall having the vacuum adiabatic body.

According to an embodiment, a degree of deformation resistance represents a degree to which an object resists deformation due to external force applied to the object and is a value determined by a shape including a thickness of the object, a material of the object, a processing method of the object, and the like. Examples of the portions having the weak degree of deformation resistance include the vicinity of the curved portion defined by the plate, at least a portion of the curved portion, the vicinity of an opening defined in the body of the apparatus, which is provided by the plate, or at least a portion of the opening.

The support may be disposed to surround at least a portion of the curved portion or the opening or may be provided to correspond to the shape of the curved portion or the opening. However, it is not excluded that the support is provided in other portions.

The opening may be understood as a portion of the apparatus including the body and the door capable of opening or closing the opening defined in the body.

An example in which the support is provided to support the plate is as follows. First, at least a portion of the support may be provided in a space defined inside the plate. The plate may include a portion including a plurality of layers, and the support may be provided between the plurality of layers. Optionally, the support may be provided to be connected to at least a portion of the plurality of layers or be provided to support at least a portion of the plurality of layers.

Second, at least a portion of the support may be provided to be connected to a surface defined on the outside of the plate. The support may be provided in the vacuum space or an external space of the vacuum space. For example, the plate may include a plurality of layers, and the support may be provided as any one of the plurality of layers. Optionally, the support may be provided to support the other one of the plurality of layers. For example, the plate may include a plurality of portions extending in the longitudinal direction, and the support may be provided as any one of the plurality of portions.

Optionally, the support may be provided to support the other one of the plurality of parts. As further another example, the support may be provided in the vacuum space or the external space of the vacuum space as a separate component, which is distinguished from the plate. Optionally, the support may be provided to support at least a portion of a surface defined on the outside of the plate. Optionally, the support may be provided to support one surface of the first plate and one surface of the second plate,

and one surface of the first plate and one surface of the second plate may be provided to face each other.

Third, the support may be provided to be integrated with the plate. An example in which the support is provided to support the heat transfer resistor may be understood instead of the example in which the support is provided to support the plate. A duplicated description will be omitted.

An example of the support in which heat transfer through the support is designed to be reduced is as follows. First, at least a portion of the components disposed in the vicinity of the support may be provided so as not to be in contact with the support or provided in an empty space provided by the support. Examples of the components include a tube or component connected to the heat transfer resistor to be described later, an exhaust port, a getter port, a tube or component passing through the vacuum space, or a tube or component of which at least a portion is disposed in the vacuum space.

Exampled of the tube may include the exhaust port, a getter port. Examples of the empty space may include an empty space provided in the support, an empty space provided between the plurality of supports, and an empty space provided between the support and a separate component that is distinguished from the support.

Optionally, at least a portion of the component may be disposed in a through-hole defined in the support, be disposed between the plurality of bars, be disposed between the plurality of connection plates, or be disposed between the plurality of support plates. Optionally, at least a portion of the component may be disposed in a spaced space between the plurality bars, be disposed in a spaced space between the plurality of connection plates, or be disposed in a spaced space between the plurality of support plates. Second, the adiabatic body may be provided on at least a portion of the support or in the vicinity of at least a portion of the support.

The adiabatic body may be provided to be in contact with the support or provided so as not to be in contact with the support. The adiabatic body may be provided at a portion in which the support and the plate are in contact with each other. The adiabatic body may be provided on at least a portion of one surface and the other surface of the support or be provided to cover at least a portion of one surface and the other surface of the support. The adiabatic body may be provided on at least a portion of a periphery of one surface and a periphery of the other surface of the support or be provided to cover at least a portion of a periphery of one surface and a periphery of the other surface of the support.

The support may include a plurality of bars. The adiabatic body may be disposed on an area from a point at which any one of the plurality of bars is disposed to a midpoint between the one bar and the surrounding bars. Third, when cold is transferred through the support, a heat source may be disposed at a position at which the heat adiabatic body described in the second example is disposed. When a temperature of the first space is lower than a temperature of the second space, the heat source may be disposed on the second plate or in the vicinity of the second plate. When heat is transmitted through the support, a cold source may be disposed at a position at which the heat adiabatic body described in the second example is disposed.

When a temperature of the first space is higher than a temperature of the second space, the cold source may be disposed on the second plate or in the vicinity of the second plate. As fourth example, the support may include a portion having heat transfer resistance higher than a metal or a portion having heat transfer resistance higher than the plate. The support may include a portion having heat transfer resistance less than that of another adiabatic body.

The support may include at least one of a non-metal material, PPS, and glass fiber (GF), low outgassing PC, PPS, or LCP. This is done for a reason in which high compressive strength, low outgassing, and a water absorption rate, low thermal conductivity, high compressive strength at a high temperature, and excellent workability are being capable of obtained.

Examples of the support may be the bars 30 and 31, the connection plate 35, the support plate 35, a porous material 33, and a filler 33. In this embodiment, the support may include any one of the above examples, or an example in which at least two examples are combined.

As first example, the support may include bars 30 and 31. The bar may include a portion extending in a direction in which the first plate and the second plate are connected to each other to support a gap between the first plate and the second plate. The bar may include a portion extending in a height direction of the vacuum space and a portion extending in a direction that is substantially perpendicular to the direction in which the plate extends. The bar may be provided to support only one of the first plate and the second plate or may be provided both the first plate and the second plate.

For example, one surface of the bar may be provided to support a portion of the plate. the other surface of the bar may be provided so as not to be in contact with the other portion of the plate. As another example, one surface of the bar may be provided to support at least a portion of the plate. the other surface of the bar may be provided to support the other portion of the plate.

The support may include a bar having an empty space therein or a plurality of bars, and an empty space are provided between the plurality of bars. In addition, the support may include a bar, and the bar may be disposed to provide an empty space between the bar and a separate component that is distinguished from the bar.

The support may selectively include a connection plate 35 including a portion connected to the bar or a portion connecting the plurality of bars to each other. The connection plate may include a portion extending in the longitudinal direction of the vacuum space or a portion extending in the direction in which the plate extends. An XZ-plane cross-sectional area of the connection plate may be greater than an XZ-plane cross-sectional area of the bar. The connection plate may be provided on at least one of one surface and the other surface of the bar or may be provided between one surface and the other surface of the bar.

At least one of one surface and the other surface of the bar may be a surface on which the bar supports the plate. The shape of the connection plate is not limited. The support may include a connection plate having an empty space therein or a plurality of connection plates. An empty space may be provided between the plurality of connection plates. In addition, the support may include a connection plate.

The connection plate may be disposed to provide an empty space between the connection plate and a separate component that is distinguished from the connection plate. As a second example, the support may include a support plate 35. The support plate may include a portion extending in the longitudinal direction of the vacuum space or a portion extending in the direction in which the plate extends. The support plate may be provided to support only one of the first plate and second plate. The support plate may include a plurality of ribs(35) in a shape of lattice.

The support plate may be provided to support both the first plate and the second plate. For example, one surface of the support plate may be provided to support a portion of the plate, and the other surface of the support plate may be provided so as not to be in contact with the other portion of the plate. As another example, one surface of the support plate may be provided to support at least a portion of the plate, and the other surface of the support plate may be provided to support the other portion of the plate. A cross-sectional shape of the support plate is not limited.

The support may include a support plate having an empty space therein or a plurality of support plates, and an empty space are provided between the plurality of support plates. In addition, the support may include a support plate, and the support plate may be disposed to provide an empty space between the support plate and a separate component that is distinguished from the support plate.

As a third example, the support may include a porous material 33 or a filler 33. The inside of the vacuum space may be supported by the porous material or the filler. The inside of the vacuum space may be completely filled by the porous material or the filler. The support may include a plurality of porous materials or a plurality of fillers. The plurality of porous materials or the plurality of fillers may be disposed to be in contact with each other.

When an empty space is provided inside the porous material, provided between the plurality of porous materials, or provided between the porous material and a separate component that is distinguished from the porous material, the porous material may be understood as including any one of the aforementioned bar, connection plate, and support plate.

When an empty space is provided inside the filler, provided between the plurality of fillers, or provided between the filler and a separate component that is distinguished from the filler, the filler may be understood as including any one of the aforementioned bar, connection plate, and support plate. The support according to the present disclosure may include any one of the above examples or an example in which two or more examples are combined.

Referring to Fig. ()3a, as an embodiment, the support may include a bar 31 and a connection plate and support plate 35. The connection plate and the supporting plate may be designed separately. Referring to Fig. 3(b), as an embodiment, the support may include a bar 31, a connection plate and support plate 35, and a porous material 33 filled in the vacuum space. The porous material 33 may have emissivity greater than that of stainless steel, which is a material of the plate, but since the vacuum space is filled, resistance efficiency of radiant heat transfer is high.

The porous material may also function as a heat transfer resistor to be described later. More preferably, the porous material may perform a function of a radiation resistance sheet to be described later. Referring to Fig. (3c), as an embodiment, the support may include a porous material 33 or a filler 33. The porous material 33 and the filler may be provided in a compressed state to maintain a gap between the vacuum space.

The film 34 may be provided in a state in which a hole is punched as, for example, a PE material. The porous material 33 or the filler may perform both a function of the heat transfer resistor and a function of the support, which will be described later. More preferably, the porous material may perform both a function of the radiation resistance sheet and a function of the support to be described later.

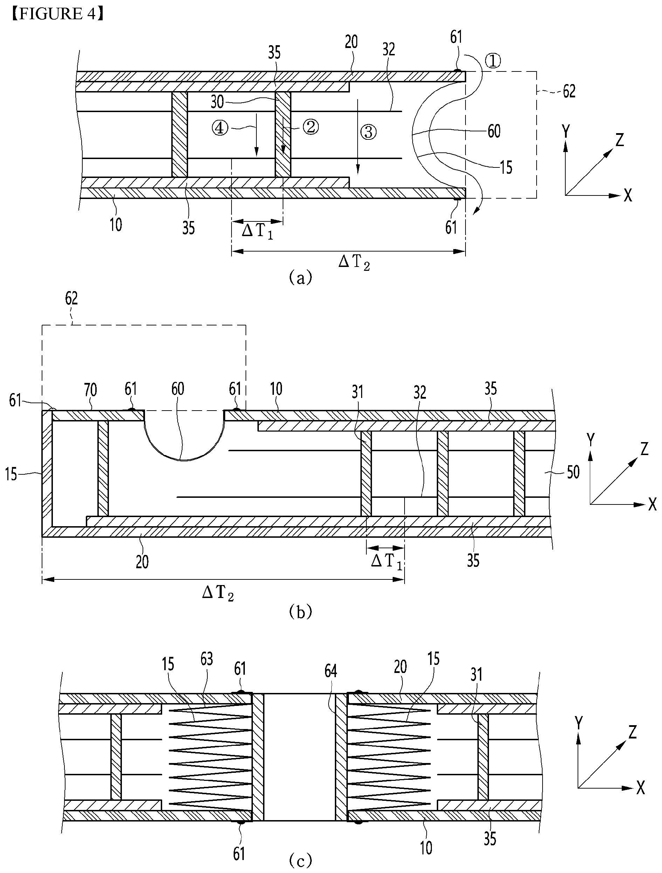

Fig. 4 is a view for explaining an example of the vacuum adiabatic body based on heat transfer resistors 32, 33, 60, and 63 (e.g., thermal insulator and a heat transfer resistance body). The vacuum adiabatic body according to the present disclosure may optionally include a heat transfer resistor. An example of the heat transfer resistor is as follows. The present disclosure may be any one of the following examples or a combination of two or more examples.

The heat transfer resistors 32, 33, 60, and 63 may be objects that reduce an amount of heat transfer between the first space and the second space or objects that reduce an amount of heat transfer between the first plate and the second plate. The heat transfer resistor may be disposed on a heat transfer path defined between the first space and the second space. The heat transfer resistor may be disposed on a heat transfer path formed between the first plate and the second plate. The heat transfer resistor may include a portion extending in a direction along a wall defining the vacuum space.

The heat transfer resistor may include a portion extending in a direction in which the plate extends. Optionally, the heat transfer resistor may include a portion extending from the plate in a direction away from the vacuum space. The heat transfer resistor may be provided on at least a portion of the periphery of the first plate or the periphery of the second plate.

The heat transfer resistor may be provided on at least a portion of an edge of the first plate or an edge of the second plate. The heat transfer resistor may be provided at a portion, in which the through-hole is defined. The heat transfer resistor may be provided as a tube connected to the through-hole. A separate tube or a separate component that is distinguished from the tube may be disposed inside the tube.

Exampled of the aforementioned tube may include the exhaust port, a getter port The heat transfer resistor may include a portion having heat transfer resistance greater than that of the plate. In this case, adiabatic performance of the vacuum adiabatic body may be further improved. A shield 62 may be provided on the outside of the heat transfer resistor to be insulated. The inside of the heat transfer resistor may be insulated by the vacuum space. The shield may be provided as a porous material or a filler that is in contact with the inside of the heat transfer resistor.

The shield may be an adiabatic structure that is exemplified by a separate gasket placed outside the inside of the heat transfer resistor. The heat transfer resistor may be a wall defining the third space.

An example in which the heat transfer resistor is connected to the plate may be understood as replacing the support with the heat transfer resistor in an example in which the support is provided to support the plate. A duplicate description will be omitted. The example in which the heat transfer resistor is connected to the support may be understood as replacing the plate with the support in the example in which the heat transfer resistor is connected to the plate. A duplicate description will be omitted. The example of reducing heat transfer via the heat transfer body may be applied as a substitute the example of reducing the heat transfer via the support, and thus, the same explanation will be omitted.

In the present disclosure, the heat transfer resistor may be one of a radiation resistance sheet 32, a porous material 33, a filler 33, and a conductive resistance sheet. In the present disclosure, the heat transfer resistor may include a combination of at least two of the radiation resistance sheet 32, the porous material 33, the filler 33, and the conductive resistance sheet. As a first example, the heat transfer resistor may include a radiation resistance sheet 32.

The radiation resistance sheet may include a portion having heat transfer resistance greater than that of the plate, and the heat transfer resistance may be a degree of resistance to heat transfer by radiation. The support may perform a function of the radiation resistance sheet together. A conductive resistance sheet to be described later may perform the function of the radiation resistance sheet together. As a second example, the heat transfer resistor may include conduction resistance sheets 60 and 63.

The conductive resistance sheet may include a portion having heat transfer resistance greater than that of the plate, and the heat transfer resistance may be a degree of resistance to heat transfer by conduction. For example, the conductive resistance sheet may have a thickness less than that of at least a portion of the plate. As another example, the conductive resistance sheet may include one end and the other end, and a length of the conductive resistance sheet may be longer than a straight distance connecting one end of the conductive resistance sheet to the other end of the conductive resistance sheet.

As another example, the conductive resistance sheet may include a material having resistance to heat transfer greater than that of the plate by conduction. As another example, the heat transfer resistor may include a portion having a curvature radius less than that of the plate.

Referring to Fig. 4()a, for example, a conductive resistance sheet may be provided on a side plate connecting the first plate to the second plate. Referring to Fig. 4b(e), for example, a conductive resistance sheet 60 may be provided on at least a portion of the first plate and the second plate. A connection frame 70 may be further provided outside the conductive resistance sheet. The connection frame may be a portion from which the first plate or the second plate extends or a portion from which the side plate extends.

Optionally, the connection frame 70 may include a portion at which a component for sealing the door and the body and a component disposed outside the vacuum space such as the exhaust port and the getter port, which are required for the exhaust process, are connected to each other.

Referring to Fig. 4c(), for example, a conductive resistance sheet may be provided on a side plate connecting the first plate to the second plate. The conductive resistance sheet may be installed in a through-hole passing through the vacuum space. The conduit 64 may be provided separately outside the conductive resistance sheet. The conductive resistance sheet may be provided in a pleated shape. Through this, the heat transfer path may be lengthened, and deformation due to a pressure difference may be prevented. A separate shielding member for insulating the conductive resistance sheet 63 may also be provided. The conductive resistance sheet may include a portion having a degree of deformation resistance less than that of at least one of the plate, the radiation resistance sheet, or the support. The radiation resistance sheet may include a portion having a degree of deformation resistance less than that of at least one of the plate or the support. The plate may include a portion having a degree of deformation resistance less than that of the support. The conductive resistance sheet may include a portion having conductive heat transfer resistance greater than that of at least one of the plate, the radiation resistance sheet, or the support. The radiation resistance sheet may include a portion having radiation heat transfer resistance greater than that of at least one of the plate, the conductive resistance sheet, or the support. The support may include a portion having heat transfer resistance greater than that of the plate.

For example, at least one of the plate, the conductive resistance sheet, or the connection frame may include stainless steel material, the radiation resistance sheet may include aluminum, and the support may include a resin material.

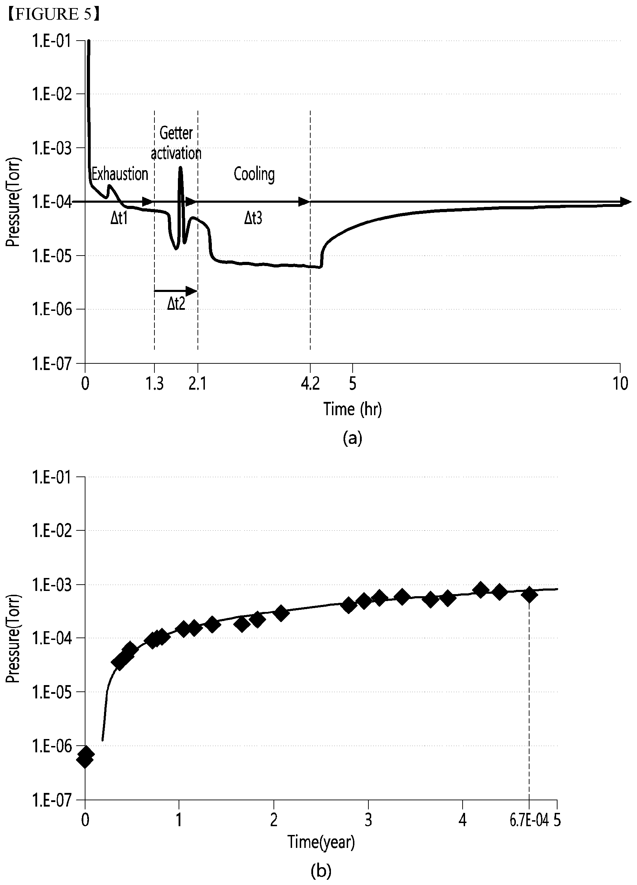

Fig. 5 is a graph for observing a process of exhausting the inside of the vacuum adiabatic body with a time and pressure when the support is used. An example of a vacuum adiabatic body vacuum exhaust process vacuum is as follows. The present disclosure may be any one of the following examples or a combination of two or more examples.

While the exhaust process is being performed, an outgassing process, which is a process in which a gas of the vacuum space is discharged, or a potential gas remaining in the components of the vacuum adiabatic body is discharged, may be performed. As an example of the outgassing process, the exhaust process may include at least one of heating or drying the vacuum adiabatic body, providing a vacuum pressure to the vacuum adiabatic body, or providing a getter to the vacuum adiabatic body. In this case, it is possible to promote the vaporization and exhaust of the potential gas remaining in the component provided in the vacuum space. The exhaust process may include a process of cooling the vacuum adiabatic body. The cooling process may be performed after the process of heating or drying the vacuum adiabatic body is performed. The process of heating or drying the vacuum adiabatic body process of providing the vacuum pressure to the vacuum adiabatic body may be performed together.

The process of heating or drying the vacuum adiabatic body and the process of providing the getter to the vacuum adiabatic body may be performed together. After the process of heating or drying the vacuum adiabatic body is performed, the process of cooling the vacuum adiabatic body may be performed.

The process of providing the vacuum pressure to the vacuum adiabatic body and the process of providing the getter to the vacuum adiabatic body may be performed so as not to overlap each other.

For example, after the process of providing the vacuum pressure to the vacuum adiabatic body is performed, the process of providing the getter to the vacuum adiabatic body may be performed. When the vacuum pressure is provided to the vacuum adiabatic body, a pressure of the vacuum space may drop to a certain level and then no longer drop. Here, after stopping the process of providing the vacuum pressure to the vacuum adiabatic body, the getter may be input. As an example of stopping the process of providing the vacuum pressure to the vacuum adiabatic body, an operation of a vacuum pump connected to the vacuum space may be stopped. When inputting the getter, the process of heating or drying the vacuum adiabatic body may be performed together. Through this, the outgassing may be promoted. As another example, after the process of providing the getter to the vacuum adiabatic body is performed, the process of providing the vacuum pressure to the vacuum adiabatic body may be performed.

The time during which the vacuum adiabatic body vacuum exhaust process is performed may be referred to as a vacuum exhaust time. The vacuum exhaust time includes at least one of a time Δ1 during which the process of heating or drying the vacuum adiabatic body is performed, a time Δt2 during which the process of maintaining the getter in the vacuum adiabatic body is performed, of a time Δt3 during which the process of cooling the vacuum adiabatic body is performed. Examples of times Δt1, Δt2, and Δt3 are as follows. The present disclosure may be any one of the following examples or a combination of two or more examples. In the vacuum adiabatic body vacuum exhaust process, the time Δt1 may be a time t1a or more and a time t1b or less. As a first example, the time t1a may be greater than or equal to about 0.2 hr and less than or equal to about 0.5 hr. The time t1b may be greater than or equal to about 1 hr and less than or equal to about 24.0 hr.

The time Δt1 may be about 0.3 hr or more and about 12.0 hr or less. The time Δt1 may be about 0.4 hr or more and about 8.0 hr or less. The time Δt1 may be about 0.5 hr or more and about 4.0 hr or less. In this case, even if the Δt1 is kept as short as possible, the sufficient outgassing may be applied to the vacuum adiabatic body. For example, this case may include a case in which a component of the vacuum adiabatic body, which is exposed to the vacuum space, among the components of the vacuum adiabatic body, has an outgassing rate (%) less than that of any one of the component of the vacuum adiabatic body, which is exposed to the external space of the vacuum space. Specifically, the component exposed to the vacuum space may include a portion having a outgassing rate less than that of a thermoplastic polymer.

More specifically, the support or the radiation resistance sheet may be disposed in the vacuum space, and the outgassing rate of the support may be less than that of the thermoplastic plastic. As another example, this case may include a case in which a component of the vacuum adiabatic body, which is exposed to the vacuum space, among the components of the vacuum adiabatic body, has a max operating temperature (°C) greater than that of any one of the component of the vacuum adiabatic body, which is exposed to the external space of the vacuum space.

In this case, the vacuum adiabatic body may be heated to a higher temperature to increase in outgassing rate. For example, the component exposed to the vacuum space may include a portion having an operating temperature greater than that of the thermoplastic polymer. As a more specific example, the support or the radiation resistance sheet may be disposed in the vacuum space, and a use temperature of the support may be higher than that of the thermoplastic plastic.

As another example, among the components of the vacuum adiabatic body, the component exposed to the vacuum space may contain more metallic portion than a non-metallic portion. That is, a mass of the metallic portion may be greater than a mass of the non-metallic portion, a volume of the metallic portion may be greater than a volume of the non-metallic portion, or an area of the metallic portion exposed to the vacuum space may be greater than an area exposed to the non-metallic portion of the vacuum space. When the components exposed to the vacuum space are provided in plurality, the sum of the volume of the metal material included in the first component and the volume of the metal material included in the second component may be greater than that of the volume of the non-metal material included in the first component and the volume of the non-metal material included in the second component. When the components exposed to the vacuum space are provided in plurality, the sum of the mass of the metal material included in the first component and the mass of the metal material included in the second component may be greater than that of the mass of the non-metal material included in the first component and the mass of the non-metal material included in the second component. When the components exposed to the vacuum space are provided in plurality, the sum of the area of the metal material, which is exposed to the vacuum space and included in the first component, and an area of the metal material, which is exposed to the vacuum space and included in the second component, may be greater than that of the area of the non-metal material, which is exposed to the vacuum space and included in the first component, and an area of the non-metal material, which is exposed to the vacuum space and included in the second component.

As a second example, the time t1a may be greater than or equal to about 0.5 hr and less than or equal to about 1 hr. The time t1b may be greater than or equal to about 24.0 hr and less than or equal to about 65 hr. The time Δt1 may be about 1.0 hr or more and about 48.0 hr or less. The time Δt1 may be about 2 hr or more and about 24.0 hr or less. The time Δt1 may be about 3 hr or more and about 12.0 hr or less.

In this case, it may be the vacuum adiabatic body that needs to maintain the Δt1 as long as possible. In this case, a case opposite to the examples described in the first example or a case in which the component exposed to the vacuum space is made of a thermoplastic material may be an example. A duplicated description will be omitted. In the vacuum adiabatic body vacuum exhaust process, the time Δt1 may be a time t1a or more and a time t1b or less. The time t2a may be greater than or equal to about 0.1 hr and less than or equal to about 0.3 hr. The time t2b may be greater than or equal to about 1 hr and less than or equal to about 5.0 hr.

The time Δt2 may be about 0.2 hr or more and about 3.0 hr or less. The time Δt2 may be about 0.3 hr or more and about 2.0 hr or less. The time Δt2 may be about 0.5 hr or more and about 1.5 hr or less. In this case, even if the time Δt2 is kept as short as possible, the sufficient outgassing through the getter may be applied to the vacuum adiabatic body.

In the vacuum adiabatic body vacuum exhaust process, the time Δt3 may be a time t3a or more and a time t3b or less.

The time t3a may be greater than or equal to about 0.2 hr and less than or equal to about 0.8 hr. The time t3b may be greater than or equal to about 1 hr and less than or equal to about 65.0 hr. The time Δt3 may be about 0.2 hr or more and about 48.0 hr or less. The time Δt3 may be about 0.3 hr or more and about 24.0 hr or less. The time Δt3 may be about 0.4 hr or more and about 12.0 hr or less. The time Δt3 may be about 0.5 hr or more and about 5.0 hr or less. After the heating or drying process is performed during the exhaust process, the cooling process may be performed.

For example, when the heating and/or drying process is performed for a long time, the time Δt3 may be long. The vacuum adiabatic body according to the present disclosure may be manufactured so that the time Δt1 is greater than the time Δt2, the time Δt1 is less than or equal to the time Δt3, or the time Δt3 is greater than the time Δt2.

The following relational expression is satisfied: Δ t2< Δ t1 ≤ Δ t3. The vacuum adiabatic body according to an embodiment may be manufactured so that the relational expression: Δ t1 + Δ t2+ Δ t3 may be greater than or equal to about 0.3 hr and less than or equal to about 70 hr, be greater than or equal to about 1 hr and less than or equal to about 65 hr, or be greater than or equal to about 2 hr and less than or equal to about 24 hr. The relational expression: Δ t1 + Δ t2+ Δ t3 may be manufactured to be greater than or equal to about 3 hr and less than or equal to about 6 hr.

An example of the vacuum pressure condition during the exhaust process is as follows. The present disclosure may be any one of the following examples or a combination of two or more examples. A minimum value of the vacuum pressure in the vacuum space during the exhaust process may be greater than about 1.8E-6 Torr. The minimum value of the vacuum pressure may be greater than about 1.8E-6 Torr and less than or equal to about 1.0E-4 Torr, be greater than about 0.5E-6 Torr and less than or equal to about 1.0E-4 Torr, or be greater than about 0.5E-6 Torr and less than or equal to about 0.5E-5 Torr. The minimum value of the vacuum pressure may be greater than about 0.5E-6 Torr and less than about 1.0E-5 Torr.

As such, the limitation in which the minimum value of the vacuum pressure provided during the exhaust process is because, even if the pressure is reduced through the vacuum pump during the exhaust process, the decrease in vacuum pressure is slowed below a certain level.

As an embodiment, after the exhaust process is performed, the vacuum pressure of the vacuum space may be maintained at a pressure greater than or equal to about 1.0E-5 Torr and less than or equal to about 5.0E-1 Torr. The maintained vacuum pressure may be greater than or equal to about 1.0E-5 Torr and less than or equal to about 1.0E-1 Torr, be greater than or equal to about 1.0E-5 Torr and less than or equal to about 1.0E-2 Torr, be greater than or equal to about 1.0E-4 Torr and less than or equal to about 1.0E-2 Torr, or be greater than or equal to about 1.0E-5 Torr and less than or equal to about 1.0E-3 Torr. As a result of predicting the change in vacuum pressure with an accelerated experiment of two example products, one product may be provided so that the vacuum pressure is maintained below about 1.0E-04Torr even after about 16.3 years, and the other product may be provided so that the vacuum pressure is maintained below about 1,0E-04Torr even after about 17.8 years.

As described above, the vacuum pressure of the vacuum adiabatic body may be used industrially only when it is maintained below a predetermined level even if there is a change over time.

Fig. Sa is a graph of an elapsing time and pressure in the exhaust process according to an example, and Fig. 5b is a view explaining results of a vacuum maintenance test in the acceleration experiment of the vacuum adiabatic body of the refrigerator having an internal volume of about 128 liters.

Referring to Fig. 5b, it is seen that the vacuum pressure gradually increases according to the aging. For example, it is confirmed that the vacuum pressure is about 6.7E-04 Torr after about 4.7 years, about 1.7E-03 Torr after about 10 years, and about 1.0E-02 Torr after about 59 years. According to these experimental results, it is confirmed that the vacuum adiabatic body according to the embodiment is sufficiently industrially applicable.

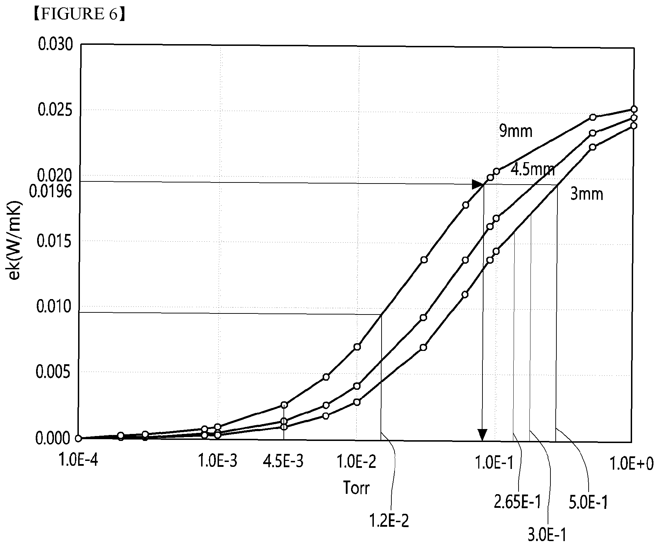

Fig. 6 is a graph illustrating results obtained by comparing the vacuum pressure with gas conductivity. Referring to Fig. 6, gas conductivity with respect to the vacuum pressure depending on a size of the gap in the vacuum space 50 was represented as a graph of effective heat transfer coefficient (eK). The effective heat transfer coefficient (eK) was measured when the gap in the vacuum space 50 has three values of about 3 mm, about 4.5 mm, and about 9 mm. The gap in the vacuum space 50 is defined as follows. When the radiation resistance sheet 32 exists inside surface vacuum space 50, the gap is a distance between the radiation resistance sheet 32 and the plate adjacent thereto. When the radiation resistance sheet 32 does not exist inside surface vacuum space 50, the gap is a distance between the first and second plates. It was seen that, since the size of the gap is small at a point corresponding to a typical effective heat transfer coefficient of about 0.0196 W/mK, which is provided to an adiabatic material formed by foaming polyurethane, the vacuum pressure is about 5.0E-1 Torr even when the size of the gap is about 3 mm.

Meanwhile, it was seen that the point at which reduction in adiabatic effect caused by the gas conduction heat is saturated even though the vacuum pressure decreases is a point at which the vacuum pressure is approximately 4.5E-3 Torr. The vacuum pressure of about 4.5E-3 Torr may be defined as the point at which the reduction in adiabatic effect caused by the gas conduction heat is saturated.

Also, when the effective heat transfer coefficient is about 0.01 W/mK, the vacuum pressure is about 1.2E-2 Torr. An example of a range of the vacuum pressure in the vacuum space according to the gap is presented. The support may include at least one of a bar, a connection plate, or a support plate. In this case, when the gap of the vacuum space is greater than or equal to about 3 mm, the vacuum pressure may be greater than or equal to A and less than about 5E-1 Torr, or be greater than about 2.65E-1 Torr and less than about 5E-1 Torr. As another example, the support may include at least one of a bar, a connection plate, or a support plate. In this case, when the gap of the vacuum space is greater than or equal to about 4.5 mm, the vacuum pressure may be greater than or equal to A and less than about 3E-1 Torr, or be greater than about 1.2E-2 Torr and less than about 5E-1 Torr.

As another example, the support may include at least one of a bar, a connection plate, or a support plate, and when the gap of the vacuum space is greater than or equal to about 9 mm, the vacuum pressure may be greater than or equal to A and less than about 1.0×10^-1 Torr or be greater than about 4.5E-3 Torr and less than about 5E-1 Torr.

Here, the A may be greater than or equal to about 1.0×10^-6 Torr and less than or equal to about 1.0E-5 Torr. The A may be greater than or equal to about 1.0×10^-5 Torr and less than or equal to about 1.0E-4 Torr. When the support includes a porous material or a filler, the vacuum pressure may be greater than or equal to about 4.7E-2 Torr and less than or equal to about 5E-1 Torr. In this case, it is understood that the size of the gap ranges from several micrometers to several hundreds of micrometers. When the support and the porous material are provided together in the vacuum space, a vacuum pressure may be created and used, which is middle between the vacuum pressure when only the support is used and the vacuum pressure when only the porous material is used.

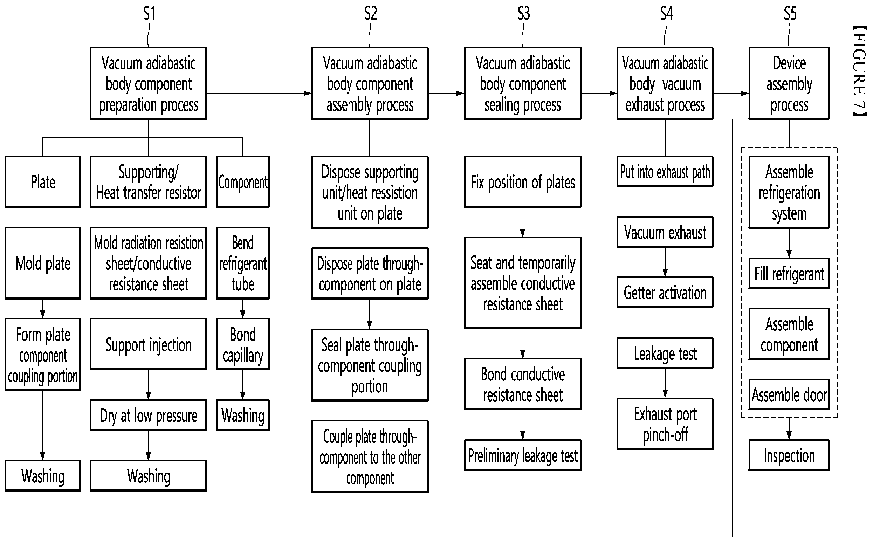

Fig. 7 is a view for explaining a process of manufacturing the vacuum adiabatic body.

Optionally, the vacuum adiabatic body may be manufactured by a vacuum adiabatic body component preparation process in which the first plate and the second plate are prepared in advance. Optionally, the vacuum adiabatic body may be manufactured by a vacuum adiabatic body component assembly process in which the first plate and the second plate are assembled. Optionally, the vacuum adiabatic body may be manufactured by a vacuum adiabatic body vacuum exhaust process in which a gas in the space defined between the first plate and the second plate is discharged. Optionally, after the vacuum adiabatic body component preparation process is performed, the vacuum adiabatic body component assembly process or the vacuum adiabatic body exhaust process may be performed.

Optionally, after the vacuum adiabatic body component assembly process is performed, the vacuum adiabatic body vacuum exhaust process may be performed. Optionally, the vacuum adiabatic body may be manufactured by the vacuum adiabatic body component sealing process (S3) in which the space between the first plate and the second plate is sealed. The vacuum adiabatic body component sealing process may be performed before the vacuum adiabatic body vacuum exhaust process (S4). The vacuum adiabatic body may be manufactured as an object with a specific purpose by an apparatus assembly process (S5) in which the vacuum adiabatic body is combined with the components constituting the apparatus. The apparatus assembly process may be performed after the vacuum adiabatic body vacuum exhaust process.

Here, the components constituting the apparatus means components constituting the apparatus together with the vacuum adiabatic body.

The vacuum adiabatic body component preparation process (S 1) is a process in which components constituting the vacuum adiabatic body are prepared or manufactured. Examples of the components constituting the vacuum adiabatic body may include various components such as a plate, a support, a heat transfer resistor, and a tube. The vacuum adiabatic body component assembly process (S2) is a process in which the prepared components are assembled. The vacuum adiabatic body component assembly process may include a process of disposing at least a portion of the support and the heat transfer resistor on at least a portion of the plate.

For example, the vacuum adiabatic body component assembly process may include a process of disposing at least a portion of the support and the heat transfer resistor between the first plate and the second plate. Optionally, the vacuum adiabatic body component assembly process may include a process of disposing a penetration component on at least a portion of the plate. For example, the vacuum adiabatic body component assembly process may include a process of disposing the penetration component or a surface component between the first and second plates. After the penetration component may be disposed between the first plate and the second plate, the penetration component may be connected or sealed to the penetration component coupling portion.

An example of a vacuum adiabatic body vacuum exhaust process vacuum is as follows. The present disclosure may be any one of the, examples or a combination of two or more examples. The vacuum adiabatic body vacuum exhaust process may include at least one of a process of inputting the vacuum adiabatic body into an exhaust passage, a getter activation process, a process of checking vacuum leakage and a process of closing the exhaust port. The process of forming the coupling part may be performed in at least one of the vacuum adiabatic body component preparation process, the vacuum adiabatic body component assembly process, or the apparatus assembly process. Before the vacuum adiabatic body exhaust process is performed, a process of washing the components constituting the vacuum adiabatic body may be performed. Optionally, the washing process may include a process of applying ultrasonic waves to the components constituting the vacuum adiabatic body or a process of providing ethanol or a material containing ethanol to surfaces of the components constituting the vacuum adiabatic body. The ultrasonic wave may have an intensity between about 10 kHz and about 50 kHz. A content of ethanol in the material may be about 50% or more. For example, the content of ethanol in the material may range of about 50% to about 90%. As another example, the content of ethanol in the material may range of about 60% to about 80%.

As another example, the content of ethanol in the material may be range of about 65% to about 75%. Optionally, after the washing process is performed, a process of drying the components constituting the vacuum adiabatic body may be performed. Optionally, after the washing process is performed, a process of heating the components constituting the vacuum adiabatic body may be performed.

A heat exchanger may be installed in the vacuum adiabatic body. The following may be optional. The heat exchanger may connect the first space and the second space. The heat exchanger may exchange heat between the refrigerant discharged from the evaporator and the refrigerant suctioned into the evaporator. At least a portion of the heat exchanger may be placed in the third space.

Matters and descriptions disclosed in any drawing of this document may provide different embodiments. Contents disclosed in any drawing of this document may be applied to the contents of other drawings.

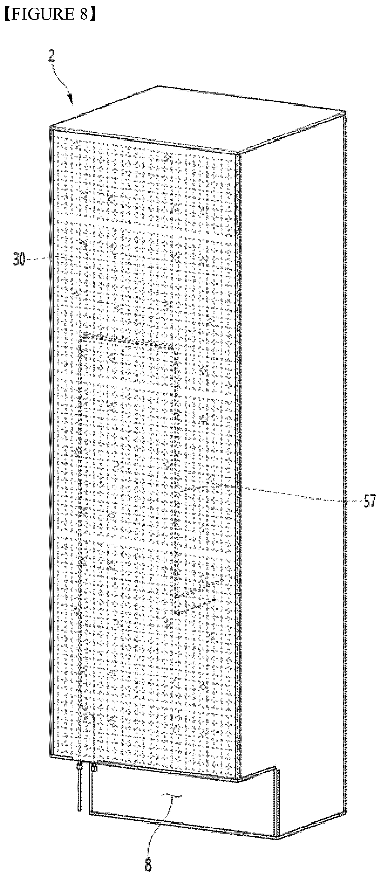

Fig. 8 is a view illustrating a state where a support and a heat exchanger are installed, as an example.

The following may be optional. Referring to Fig. 8, the heat exchanger 57 may be installed on the rear surface of the vacuum adiabatic body. A first end portion of a refrigerant tube forming the heat exchanger may be led out to a machine room 8. The machine room may be placed in a second space. A second end portion of a refrigerant tube forming the heat exchanger may be led out to a low-temperature space. The low-temperature space may be placed in the first space. The heat exchanger may be provided with a predetermined length to enable sufficient heat exchange. The heat exchanger may have a bent part. The heat exchanger may have a straight part extending in a straight line. At least two of the straight parts may be provided. A bent part may be provided between the straight parts. At least one bent part may be bent in the extension direction of the third space. At least one bent part may be bent in the thickness direction of the third space.

The following may be optional. The support 30 placed on the rear surface of the vacuum adiabatic body may be provided as a single structure of one body. The single structure may be provided as a structure in which at least two individual units are connected to each other. The units 300 may be respectively fastened vertically. The units 301 may be fastened such that the units below and above are alternately disposed. Accordingly, the single structure may be provided. There may be a gap in the left and right direction on the left and right sides of the units. The bent part may not be placed in the left-right gap of each unit. Accordingly, the positioning of the bent part may be convenient. Accordingly, the heat exchanger may be stably supported. When there are two bent parts, the two bent parts may be placed on the same unit. The heat exchanger may pass through at least two or more units.

The following may be optional. The support may be provided as a lattice structure. The heat exchanger may pass between the lattices. The heat exchanger may be moved while being placed on the single structure. The heat exchanger may be placed on the plate while being placed on the single structure. The support may be made of PPS. The support may be made of PPS containing glass fiber.

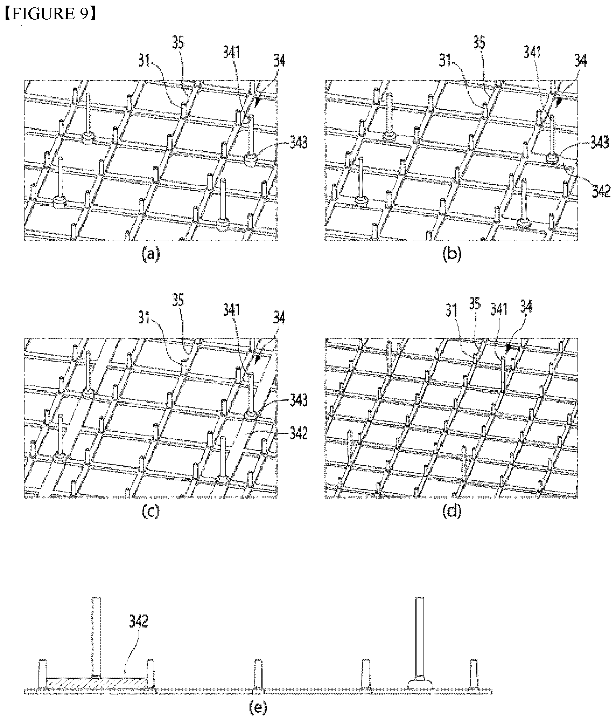

Fig. 9 illustrates an embodiment of support. Fig. 9(a) is an embodiment of providing an injection gate in a lattice. Fig. 4(b) is an embodiment of varying the cross-sectional area of the lattice. Fig. 4(c) is an embodiment of providing a separate lattice. Fig. 4(d) is an embodiment of not providing a separate injection gate. Fig. 4(e) is an embodiment of varying the cross-sectional area of the injection flow path. See Fig. 9.

The support may be manufactured by injection molding. The support may be provided as a single structure by assembling at least two units. The following items may be applied selectively. When the support is injected, an injection gate 34 may be provided. The injection gate may be removed. The injection gate may be used for the operation of the support without being removed. The injection gate 34 may include an injection bar 341 into which injection fluid is injected. An injection base 343 may be included through which the injection fluid injected through the injection bar spreads to multiple places. An injection flow path 342 through which the injection fluid flows may be provided in the injection base 343. The injection bar 341 may be provided in the same direction as the bar 31. The injection bar 341 may perform the same operation as the bar 31. For example, the injection bar 341 may support the heat exchanger. For example, the injection bar 341 may maintain the vacuum space. For example, the injection bar 341 may reinforce the strength of the vacuum adiabatic body. The injection bar 31 may be provided on the lattice of the support plate 35. The injection base 343 may be provided on the lattice of the support plate 35. The injection base 343 may be provided to be larger than the width of the lattice. The injection base 343 may protrude upward from the lattice. The injection bar 31 may be provided on the lattice extending in the same direction. The injection bar 31 may be provided on the lattice extending in a different direction.

The following may be applied optionally. The plurality of ribs forming the lattice may include at least two kinds of ribs having different widths. An injection gate may be provided on at least one of the ribs. An injection gate may be provided on at least one of the support plates supporting the first and second plates.

The following may be applied optionally. The injection flow path 342 may provide a lattice. The injection flow path 342 may be provided with a cross-sectional area larger than that of the support plate. This may improve the fluidity of the injection fluid passing through the injection flow path. The injection flow path 342 may have a width larger than that of the lattice. The injection flow path 342 may have a thickness larger than that of the lattice.

The following may be applied optionally. The injection flow path 342 may be provided separately from the lattice. The injection flow path 342 may additionally provide a second lattice in addition to the first lattice. The first lattice and the second lattice may have different lattice sizes. The injection flow path 342 may be provided in one direction.

The following may be applied optionally. The injection bar 341 may be provided at the same location where the bar 31 is provided. The injection fluid may be injected through the bar 31. The injection base 343 may not be provided. The injection flow path 343 may be provided in the same manner as the lattice.

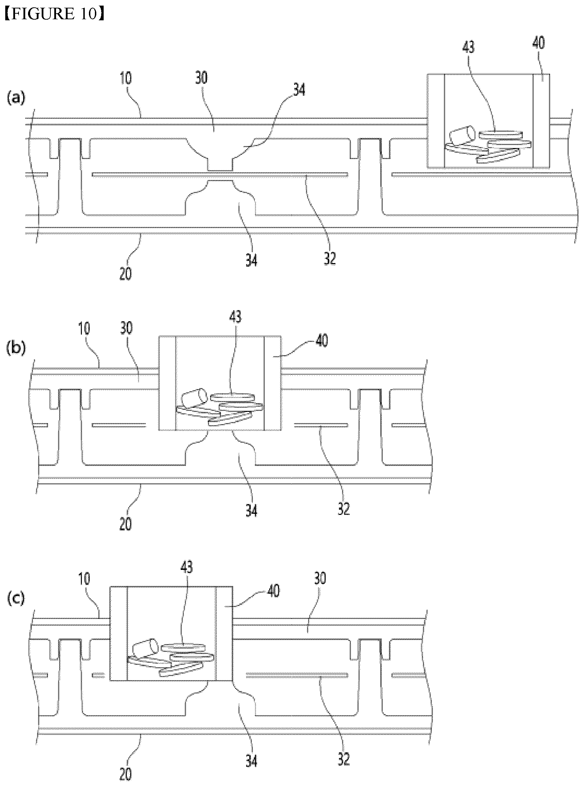

Fig. 10 is a view illustrating an embodiment of an injection gate. Fig. 10 (a) is a view explaining the operation of an injection gate and a radiation resistance sheet. Fig. 10 (b) is a view explaining the first operation of an injection gate and a port. Fig. 10 (c) is a view explaining the second operation of an injection gate and a port. See Fig. 10.

The injection gate 34 may not be removed. The injection gate may be a configuration required for a vacuum adiabatic body. The following may be applied optionally. The injection gate may support the radiation resistance sheet 32. The injection gate may be provided with a resin. The heat of the radiation resistance sheet may not pass through the injection gate well. The injection gate may support at least one surface of the radiation resistance sheet. The injection gate may support both surfaces of the radiation resistance sheet. The radiation resistance sheet may not move in the height direction of the vacuum space by the injection gate. The radiation resistance sheet may not move in the extension direction of the vacuum space by at least one of the bar 31 and the injection gate.

The following may be applied optionally. The injection gates provided on different support plates may be disposed so as not to overlap each other in the height direction of the vacuum space. The different support plates may include a first support plate adjacent to the first plate. The different support plates may include a second support plate adjacent to the second plate. At least a portion of the radiation resistance sheet may be restricted from moving by the injection gate. The injection gates provided on different support plates may be disposed so as to overlap each other in the height direction of the vacuum space. The radiation resistance sheet may be placed between the injection gates that overlap each other.

The following may be applied optionally. The injection gate 34 may be aligned with a tube. The tube may be a port. A getter may be inserted into the port. The getter may be supported by being caught by the injection gate 34. If the getter moves freely inside the vacuum space, noise may be generated. The getter may be gathered in an internal space bordering the injection gate and the port. The getter may be stored in the port. When the inner diameter of the port is referred to as R, the tip diameter of the injection gate is referred to as r, the diameter of the getter is referred to as L, and the height of the getter is referred to as h, at least one of Equation 1 and Equation 2 may be satisfied. Equation 1: (R-r)/2<L, Equation 2: (R-r)/2<h. By satisfying the equations, the getter may not escape from the storage location. The radiation resistance sheet may be removed from a place where the tube is provided. The centers of the tube and the injection gate may coincide. When drawing an extension line of the tube, the centers of the injection gate and the extension line may coincide. When drawing an extension line of the tube, at least a portion of the injection gate and the extension line may overlap. At least a portion of the tube may be closer to the plate than another portion. At least a portion of the tube may be in contact with the injection gate. A first point of an end portion of the tube may be close to the injection gate. A second point of an end portion of the tube, which is far from the first point, may be located farthest from the injection gate.

The following may be applied optionally. At least one of the first and second plates may be provided with the through-hole. A tube may be included that is connected to the through-hole and through which an object may flow. A getter may be provided at a lower portion of the tube. Here, the lower portion may be based on the direction of gravity. The injection gate may overlap the through-hole and the vacuum space in the height direction. The injection gate may overlap the tube and the vacuum space in the height direction.

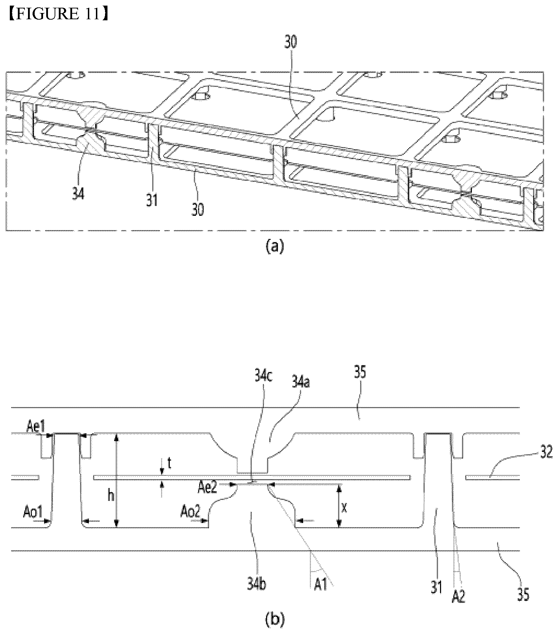

Fig. 11 is a view explaining the shape of an injection gate of an embodiment. Fig. 11 (a) is a partial perspective view illustrating the internal configuration of the vacuum adiabatic body. Fig. 11 (b) is a cross-sectional view illustrating the internal configuration of the vacuum adiabatic body. See Fig. 11.

The injection gate may have an injection side of the injection fluid smaller than an exit side of the injection fluid. For example, the tip of the injection gate may be smaller than the base of the injection gate. The following may be optionally applied. A storage space 34c may be provided between two facing injection gates 34a and 34b. At least one of the radiation resistance sheet and the getter may be stored. The bar is different from that passing through the radiation resistance sheet. The injection gate may reduce radiation heat. The size Ae2 of the tip of the injection gate 34 may be smaller than the size Ao2 of the base of the injection gate. The size Ae1 of the tip of the bar 31 may be smaller than the size Ao1 of the base of the bar. The inclination angle A1 of the injection gate 34 may be larger than the inclination angle of the bar 31. The size of the injection gate may be larger than the size of the bar. The height of the injection gate may be lower than the height of the bar. When the height of the injection gate is referred to as x, the height of the bar is referred to as h, and the thickness of the radiation resistance sheet is referred to as t, ((h-t)/2-1) mm < x < ((h-t)/2) mm may be satisfied. The injection gate may be so adjacent to the radiation resistance sheet that the injection gate is almost close to the radiation resistance sheet. The injection gate may support the radiation resistance sheet. The more radiation resistance sheets there are, the better. Compared to the case where no radiation resistance sheet is used, when one radiation resistance sheet is used, there is an improvement in power consumption of approximately 40%. Compared to the case where one radiation resistance sheet is used, there is an improvement in power consumption of approximately 4% when two radiation resistance sheets are used. Using a large number of radiation resistance sheets increases manufacturing costs, so it is not desirable.

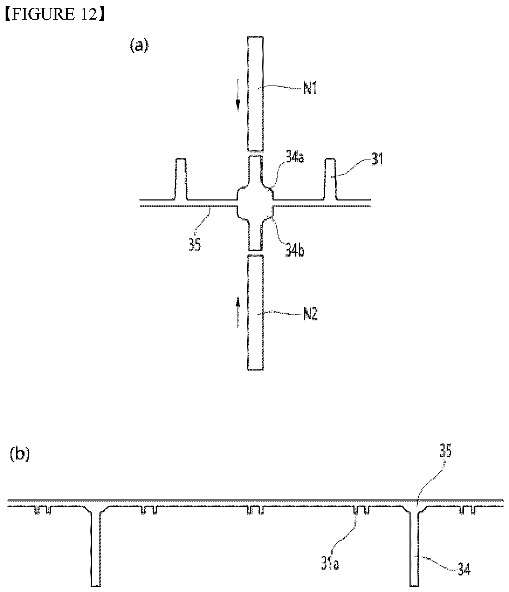

Fig. 12 is a cross-sectional view illustrating a support of an embodiment. Fig. 12 (a) is a view illustrating the position of the injection gate. Fig. 12 (b) is an example of the support. See Fig. 12.

The injection gate 34a may be placed at the same position as the bar 31. The injection gate 34b may be placed on the opposite side to where the bar is placed. N1 and N2 represent nozzles into which injection fluid is injected. If the injection gate is placed at the same position as the bar, it may be easy to remove the injection product. For example, a push bar for pushing the injection product may be on the side of the injection nozzle. In this case, if the bar and the injection gate are placed on opposite sides, the push bars must be located on both sides, which is inconvenient. Through this, the bar may also be removed. It is not excluded that the injection gate is placed on the opposite side to where the bar is placed.

The injection gate 34 may be provided on the side where the groove 31a of the support plate 35 is located. The bar 31 may be inserted into the groove 31a. The injection gate 34 may be placed between two adjacent grooves.

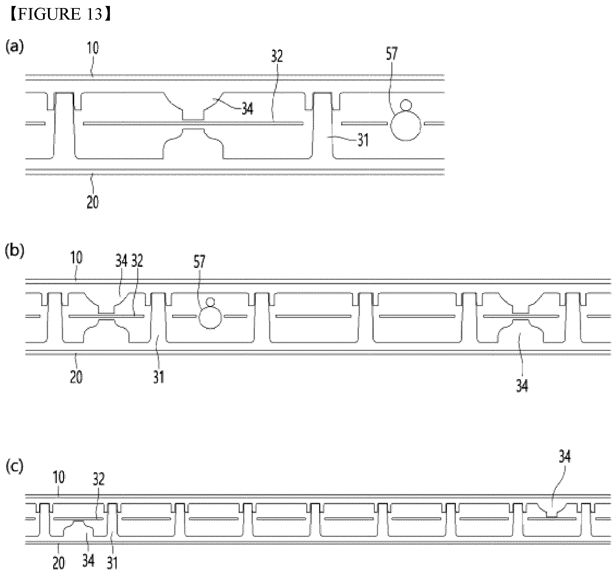

Fig. 13 is view illustrating an embodiment of the disposition relationship between the injection gate and the heat exchanger. Fig. 13 (a) illustrates the relationship between the injection gate and the heat exchanger. Fig. 13 (b) illustrates the relationship between the injection gate, the heat exchanger, and the radiation resistance sheet. Fig. 13 (c) is a view illustrating the support relationship of the injection gate. See Fig. 13.

The heat exchanger 57 may not be disposed in the internal space of the lattice having the injection gate 34. The lattice may refer to a lattice frame of the support plate. It is not preferable because the heat transfer becomes excessively large. The following may be applied optionally. The injection gate and the heat exchanger may be placed in the internal space of adjacent different lattices. The injection gate may accurately fix the radiation resistance sheet. The injection gate may capture at least one of the peripheral part and the central part of at least one of the radiation resistance sheet or the units forming the sheet. The injection gate may capture an end portion of the radiation resistance sheet. The injection gate may capture an end portion of the units forming the radiation resistance sheet. The injection gate may be provided in two or more different lattices spaced apart from each other. At least one of the first support plate on the upper side and the second support plate on the lower side may be provided with an injection gate. The first and second injection gates may be provided on the first and second support plates, respectively. In this case, the first and second injection gates may face each other. In this case, the first and second injection gates may not face each other. The first injection gate may support the upper surface of the radiation resistance sheet. The second injection gate may support the lower surface of the radiation resistance sheet. The upper surface support position and the lower surface support position of the radiation resistance sheet may be different from each other.

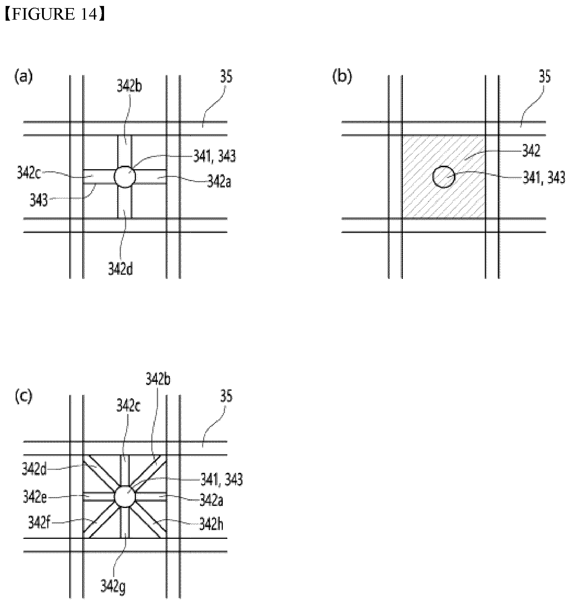

Fig. 14 is a view illustrating an embodiment of an injection gate. Fig. 14 (a) illustrates a case where there are four injection flow paths. Fig. 14 (b) illustrates a case where one lattice is an injection flow path or an injection base. Fig. 14 (c) illustrates a case where there are eight injection flow paths. See Fig. 14.

The injection gate may be used to introduce liquid injection fluid. The support or the unit of the support has a two-dimensionally large area. In order for the injection fluid to be introduced into a large area, it is preferable that the flow path resistance is small. In order to reduce the flow path resistance, the number of inj ection flow paths may be two or more. In order to distribute the injection fluid evenly, the injection flow paths may be provided in an even number. In order to distribute the injection fluid evenly, the injection flow paths may be provided symmetrically. For example, at least one of one, two, four, and eight injection flow paths may be applied. The injection flow path may mean a place directly connected to the injection base. The injection flow path may spread at a single point. The one injection flow path may mean the entire lattice of any one of the supports.

### [INDUSTRIAL APPLICABILITY]

According to the present disclosure, the reliability of a vacuum adiabatic body may be improved.

## Claims

1. A vacuum adiabatic body comprising:
a first plate having a temperature;
a second plate having a second temperature that differs from the first temperature;
a vacuum space provided between the first plate and the second plate; and
a support for maintaining the vacuum space ,
wherein the support is manufactured by injection molding and an injection gate is provided by the support.

2. The vacuum adiabatic body of claim 1, wherein the support includes a support plate having a portion extending in the longitudinal direction of the vacuum space , and wherein the support plate includes a lattice forming a through-hole.

3. The vacuum adiabatic body of claim 2, wherein the injection gate includes an injection bar into which injection fluid is introduced from the outside,
wherein the injection bar is provided in at least one of a first lattice of the support plate, and a second lattice extending in a direction that differs from the first lattice, or
wherein the injection gate includes:
an injection bar into which injection fluid is introduced from the outside, and
an injection flow path through which the injection fluid spreads in various directions, and
wherein the injection flow path has a cross-sectional area larger than or equal to that of the lattice of the support plate, or
wherein the injection gate includes:
an injection bar into which injection fluid is introduced from the outside,
an injection flow path through which the injection fluid spreads in various directions, and
an injection base between the injection bar and the injection flow path, and
wherein the injection base includes a portion provided larger than the lattice of the support plate.

4. The vacuum adiabatic body of claim 1, wherein the support includes a plurality of bars including a portion extending in the height direction of the vacuum space, and wherein the plurality of bars are disposed at a predetermined gap.

5. The vacuum adiabatic body of claim 4,
wherein the injection gate includes an injection bar into which injection fluid is introduced from the outside,
wherein the injection bar is provided at at least one of the positions where the plurality of bars are disposed, or
wherein the injection gate includes an injection bar into which injection fluid is introduced from the outside,
wherein the injection bar is provided for use with at least one of the plurality of bars, or
wherein the injection gate includes an injection bar into which injection fluid is introduced from the outside,
wherein the injection bar is disposed at at least one of the virtual lines connecting two adjacent bars among the plurality of bars, or
wherein the injection gate includes an injection bar into which injection fluid is introduced from the outside, and
wherein the inclination angle of the injection bar of the injection gate is greater than the inclination angle of the bar of the support.

6. The vacuum adiabatic body of claim 1, further comprising a tube provided on at least one of the first plate and the second plate.

7. The vacuum adiabatic body of claim 6, wherein the tube and the injection gate are spaced apart from each other.

8. The vacuum adiabatic body of claim 7, wherein the support includes:
a first bar including a portion extending in a height direction of the vacuum space, and
a second bar disposed at a predetermined gap from the first bar,
wherein the injection gate is provided in a space formed between the first bar and the second bar, and
wherein the tube is provided outside the space formed between the first bar and the second bar.

9. The vacuum adiabatic body of claim 6, wherein, when drawing an extension line in the extension direction of the tube, the extension line meets the injection gate.

10. The vacuum adiabatic body of claim 9, wherein at least a portion of the tube is in contact with or supported by the injection gate.

11. The vacuum adiabatic body of claim 9, wherein a getter is provided inside the tube, and wherein at least a portion of the getter is in contact with or is supported by the injection gate.

12. The vacuum adiabatic body of claim 1, further comprising a radiation resistance sheet reducing radiation heat transfer in the vacuum space and including a portion extending in a longitudinal direction of the vacuum space.

13. The vacuum adiabatic body of claim 12,
wherein the injection gate is provided to be in contact with the radiation resistance sheet or to support the radiation resistance sheet, or
wherein the injection gate includes:
a first injection gate, and
a second injection gate provided to face each other while being spaced apart from the first injection gate, and
wherein the radiation resistance sheet is provided between the first injection gate and the second injection gate.

14. The vacuum adiabatic body of claim 1, further comprising a heat exchanger placed inside the vacuum space.

15. The vacuum adiabatic body of claim 14,
wherein the heat exchanger and the injection gate are provided spaced apart from each other, or
wherein the heat exchanger and the injection gate are provided spaced apart from each other,
wherein the support includes a first bar including a portion extending in a height direction of the vacuum space, and a second bar disposed spaced apart from the first bar by a predetermined gap,
wherein the injection gate is provided in a space formed between the first bar and the second bar, and
wherein the heat exchanger is provided outside the space formed between the first bar and the second bar.
